# EUROPEAN PATENT APPLICATION

(11) **EP 4 517 205 A1**
(43) Date of publication of application: **05.03.2025**
(21) Application number: 23806622.9
(22) Date of filing: 30.03.2023
(51) Int. Cl.: F24F 11/84, F24F 11/86, F24F 11/00

(54) **CONTROL METHOD AND CONTROL APPARATUS FOR MULTI-SPLIT AIR CONDITIONING SYSTEM, AND MULTI-SPLIT AIR CONDITIONING SYSTEM**

(30) Priority: 16.05.2022 CN 202210529688
(71) Applicant: GD Midea Air-Conditioning Equipment Co., Ltd., Foshan, Guangdong 528311 (CN)
(72) Inventor: WANG, Zhengxing, Foshan, Guangdong 528311 (CN); TAO, Kui, Foshan, Guangdong 528311 (CN); LI, Shunquan, Foshan, Guangdong 528311 (CN); ZHU, Hehua, Foshan, Guangdong 528311 (CN); SONG, Lei, Foshan, Guangdong 528311 (CN)
(74) Representative: Ran, Handong
(86) International application number: PCT/CN2023/085160
(87) International publication number: WO 2023/221664

(57) **Abstract**

Provided in the present invention are a control method and apparatus for a multi-split air conditioning system, and a multi-split air conditioning system and a storage medium. The control method comprises: in a heating startup stage, acquiring an indoor environment temperature of a space where operating indoor units are located and an evaporator tube temperature of all the operating indoor units (S110); and when it is determined, according to the indoor environment temperature and the evaporator tube temperature of all the operating indoor units, that the current startup state of the multi-split air conditioning system is a hot startup state, controlling fans of the operating indoor units to operate at a first-level set windshield, wherein the first-level set windshield is the highest-level windshield among a plurality of levels of set windshields (S120).

## Description

### CROSS-REFERENCE TO RELATED APPLICATIONS

This application claims priority to Chinese patent application No. 202210529688.7, filed May 16, 2022 and titled "CONTROL METHOD OF MULTI-SPLIT AIR CONDITIONING SYSTEM, CONTROL DEVICE AND MULTI-SPLIT AIR CONDITIONING SYSTEM," the entire contents of which are incorporated herein by reference.

### TECHNICAL FIELD

The present disclosure relates to the technical field of air conditioning, and in particular, to a control method of a multi-split air conditioning system, a control device and the multi-split air conditioning system.

### BACKGROUND

The multi-split air conditioning system refers to a refrigerant circulation system composed of one outdoor unit and a plurality of indoor units. Because the multi-split air conditioning system has different operation states, if before the multi-split air conditioning system starts the heating function, the heating has been run and the indoor units have accumulated heat, when the heating function is started again at this time, according to the conventional heating control mode, the indoor units are controlled to start the anti-cold wind function at the initial startup, which may easily cause the indoor units to fail to dissipate heat in time and cause an over-voltage trip shutdown problem.

### SUMMARY

The present disclosure aims to at least partially solve one of the technical problems in the existing technology. To this end, a control method of a multi-split air conditioning system, a control device and the multi-split air conditioning system are proposed herein, which can effectively reduce the over-voltage trip shutdown problem.

In a first aspect of the present disclosure, an embodiment provides a control method of a multi-split air conditioning system. The multi-split air conditioning system includes an outdoor unit and a plurality of indoor units. At least one of the plurality of indoor units is an operating indoor unit in a running state. The control method includes: obtaining, in a heating-start stage, an indoor environment temperature of a space where operating indoor units are located and a temperature of an evaporator tube of each of the operating indoor units; and controlling fans of the operating indoor units to run at a first set fan speed when it is determined that the current startup state of the multi-split air conditioning system is a warm-startup state based on the indoor environment temperature and the temperature of the evaporator tube of each of the operating indoor units, where the first set fan speed is the highest fan speed in a plurality of set fan speeds.

The control method of the multi-split air conditioning system in accordance with the embodiments of the present disclosure has at least the following beneficial effects. **In** the heating-start stage, the indoor environment temperature of the space where operating indoor units are located and the temperature of the evaporator tube of each of the operating indoor units are obtained, and the current startup state of the multi-split air conditioning system is determined based on the indoor environment temperature and the temperature of the evaporator tube of each of the operating indoor units. When it is determined that the current startup state of the multi-split air conditioning system is a warm-startup state, the fans of the operating indoor units are controlled to run at a first set fan speed, which can speed up the heat dissipation of the operating indoor units, effectively reduce the over-voltage trip shutdown problem, and ensure the normal heating of the operating indoor units, thereby being beneficial to improving the user's experience.

In the above control method of the multi-split air conditioning system, when it is determined that the current startup state of the multi-split air conditioning system is the warm-startup state, the control method further includes: controlling a compressor of the outdoor unit to run for a first set time at a first platform frequency; and controlling the compressor to run at a set frequency after the compressor runs for the first set time, where the first platform frequency is greater than the set frequency.

A four-way valve is ensured to be reverse direction normally by controlling the compressor of the outdoor unit to run for the first set time at the first platform frequency in the heating-start stage. After the compressor runs for the first set time, the compressor is then controlled to run at a lower set frequency to assure that the multi-split air conditioning system may heat normally, avoid rapid frequency increase of the compressor, and reduce high-frequency running time, which can effectively reduce the over-voltage trip shutdown problem.

In the above control method of the multi-split air conditioning system, the control method further includes: controlling the compressor to run for a second set time at a second platform frequency when it is determined that the current startup state of the multi-split air conditioning system is a cold-startup state based on the indoor environment temperature and the temperature of the evaporator tube of each of the operating indoor units, where the second platform frequency is greater than the first platform frequency and the second set time is longer than the first set time; and controlling the compressor to run at the set frequency after the compressor runs for the second set time, where the second platform frequency is greater than the set frequency.

When it is determined that the current startup state of the multi-split air conditioning system is the cold-startup state based on the indoor environment temperature and the temperature of the evaporator tube of each of the operating indoor units, the compressor of the outdoor unit is controlled to run for the second set time at the second platform frequency to ensure that the four-way valve may reverse direction normally. After the compressor runs for the second set time, the compressor is then controlled to run at a lower set frequency to assure that the multi-split air conditioning system may heat normally, and avoid rapid frequency increase of the compressor, which can effectively reduce the over-voltage trip shutdown problem.

In the above control method of the multi-split air conditioning system, when it is determined that the current startup state of the multi-split air conditioning system is the cold-startup state, the control method further includes: controlling the fans of the operating indoor units to enter an anti-cold wind mode; and exiting the anti-cold wind mode and controlling the fans of the operating indoor units to run at the first set fan speed when the temperatures of the evaporator tubes of the operating indoor units are greater than the first set temperature, where the first set fan speed is the highest fan speed in the plurality of set fan speeds.

In the heating-start stage, when it is determined that the current startup state of the multi-split air conditioning system is the cold-startup state, the temperatures of the evaporator tubes of the operating indoor units are relatively low and usually equal to the indoor environment temperature. At this time, the multi-split air conditioning system is within a stable pressure range, the fans of the operating indoor units may be controlled firstly to enter the anti-cold wind mode to avoid the problem of cold wind blowing out in the initial starting stage to affect the user's comfort. When the operating indoor units are operated for a period of time, the temperatures of the evaporator tubes will gradually increase. When the temperatures of the evaporator tubes of the operating indoor units are greater than the first set temperature, the anti-cold wind mode is exited, and the fans of the operating indoor units are controlled to run at the first set fan speed. That is, the fans of the operating indoor units may be controlled to run at the highest fan speed to speed up the heat dissipation of the operating indoor units. This assures the stable operation of the operating indoor units in the process of heating, avoids the occurrence of the over-voltage trip shutdown, and ensures good heating effects.

In the above control method of the multi-split air conditioning system, the control method further includes: controlling a running fan speed of the fan to switch from the first set fan speed to the second set fan speed when a preset condition is met, where the preset condition include at least one of: a time for which the fan runs at the first set fan speed is greater than a third set time; and a time during which the temperatures of the evaporator tubes of the operating indoor units have been within a preset temperature range is longer than a fourth set time.

It should be noted that the first set fan speed is greater than the second set fan speed. When the operating indoor units run for a period of time at the first set fan speed, the heating capacities of the operating indoor units may be increased. When the preset condition is met, the running fan speed of the fans may be controlled to lower to the second set fan speed.

In the above control method of the multi-split air conditioning system, after the compressor is controlled to run at a set frequency, the control method further includes: calculating an average temperature of the tubes based on the temperature of the evaporator tube of each of the operating indoor units; and adjusting a running frequency of the compressor based on the average temperature of the tubes.

It should be noted that by controlling the compressor to run at the set frequency, over-voltage trip shutdown may be reduced, and then the running frequency of the compressor is corrected based on the temperatures of the evaporator tubes of the operating indoor units. First, the average temperature of the tubes is calculated and obtained based on the temperatures of the evaporator tubes of all operating indoor units, and the running frequency of the compressor is adjusted based on the average temperature of the tubes to ensure that the compressor runs in a normal heating state. By calculating the average temperature of the tubes, the accuracy of control may be improved.

In the above control method of the multi-split air conditioning system, adjusting the running frequency of the compressor based on the average temperature of the tubes includes: increasing the running frequency of the compressor when the average temperature of the tubes is less than a difference between a second set temperature and a first set value; and reducing the running frequency of the compressor when the average temperature of the tubes is greater than a sum of the second set temperature and the first set value.

It should be noted that the second set temperature is the heating target temperature, and the first set value is a correction value, which can make the current heating temperature fall within the heating target range. If the average temperature of the tubes is less than the difference between the second set temperature and the first set value, it means that the current heating temperature is not high enough, then the running frequency of the compressor is increased, i.e., upscaling correction. The running frequency of the compressor is adjusted one fan speed at a time. If the average temperature of the tubes is greater than the sum of the second set temperature and the first set value, it means that the current heating temperature has exceeded the heating target range, then the running frequency of the compressor is reduced, i.e., down correction. The running frequency of the compressor is adjusted one fan speed at a time. If the average temperature of the tubes is greater than or equal to the difference between the second set temperature and the first set value and less than or equal to the sum of the second set temperature and the first set value, it means that the current heating temperature falls within the heating target range, then there is no need to adjust the running frequency of the compressor.

In the above control method of the multi-split air conditioning system, at least one of the plurality of indoor units is a standby indoor unit in a standby state, and the control method further includes: controlling the multi-split air conditioning system to enter an overheat trip shutdown assistance mode to assist in reducing a pressure of the multi-split air conditioning system through the standby indoor units or the outdoor unit when the temperatures of the evaporator tubes of the operating indoor units are greater than the difference between a set shutdown temperature and a second set value.

If the temperatures of the evaporator tubes of the operating indoor units are greater than the difference between the set shutdown temperature and the second set value, it means that the temperatures of the evaporator tubes are too high and the pressure of the multi-split air conditioning system is high, that is, the multi-split air conditioning system is at a risk of overheat trip shutdown, and the temperatures of the evaporator tubes of the operating indoor units will soon reach the set shutdown temperature. To avoid the over-voltage trip shutdown of the multi-split air conditioning system, the multi-split air conditioning system is controlled to enter the overheat trip shutdown assistance mode, that is, the standby indoor units or the outdoor unit assists in reducing the pressure of the multi-line air conditioning system.

In the above control method of the multi-split air conditioning system, the control method further includes: determining the environmental state of the space where the standby indoor units are located when the multi-split air conditioning system enters the overheat trip shutdown assistance mode, where the environmental state includes a space-occupied state and a space-unoccupied state; and controlling the fans of the standby indoor units to run at a third set fan speed if it is determined that the standby indoor units are in a space-unoccupied state, where the third set fan speed is the highest fan speed in the plurality of set fan speeds.

If the temperatures of the evaporator tubes of the operating indoor units are greater than the difference between the set shutdown temperature and the second set value, the multi-split air conditioning system enters the overheat trip shutdown assistance mode to determine the environmental state of the space where the standby indoor units are located. If the standby indoor units are in the space-unoccupied state, the fans of the standby indoor units may be controlled to run at the third fan speed, that is, the fans of the standby indoor units may be controlled to run at the highest fan speed, helping reduce the pressure of the multi-split air conditioning system. By running the fans of the standby indoor units in the space-unoccupied state, it may avoid affecting the user during the running of the fans.

In the above control method of the multi-split air conditioning system, the outdoor unit includes a plurality of electronic expansion valves corresponding to the indoor units, and when the multi-split air conditioning system enters the overheat trip shutdown assistance mode, the control method further includes: adjusting an opening degree of each of the electronic expansion valves corresponding to the standby indoor units based on the temperatures of the evaporator tubes of the operating indoor units when all the standby indoor units are in a space-occupied state.

It should be noted that when the multi-split air conditioning system enters the overheat trip shutdown assistance mode, the fans are turned off due to the standby indoor units being in the space-occupied state. If all the standby indoor units are in the space-occupied state, without turning on the fans, the outdoor unit adjusts the opening degrees of the electronic expansion valves corresponding to the standby indoor units, thus helping reduce the pressure of the multi-split air conditioning system. Since the overheat trip shutdown assistance mode is triggered by the operating indoor units, the accuracy of control is ensured by obtaining the temperatures of the evaporator tubes of the operating indoor units, and adjusting the opening degrees of the electronic expansion valves corresponding to the standby indoor units based on the temperatures of the evaporator tubes of the operating indoor units.

In the above control method of the multi-split air conditioning system, adjusting the opening degrees of the electronic expansion valves corresponding to the standby indoor units based on the temperatures of the evaporator tubes of the operating indoor units includes: increasing the opening degrees of the electronic expansion valves corresponding to the standby indoor units when the temperatures of the evaporator tubes of the operating indoor units are greater than the difference between the set shutdown temperature and the second set value; and reducing the opening degrees of the electronic expansion valves corresponding to the standby indoor units when the temperatures of the evaporator tubes of the operating indoor units are less than the difference between the set shutdown temperature and the second set value.

If the temperatures of the evaporator tubes of the operating indoor units are greater than the difference between the set shutdown temperature and the second set value, it means that the temperatures of the evaporator tubes of the operating indoor units are too high and the pressure of the multi-split air conditioning system is high, then the opening degrees of the electronic expansion valves corresponding to the standby indoor units are increased to improve the refrigerant flow, and accelerate the pressure reduction of the multi-split air conditioning system. If the temperatures of the evaporator tubes of the operating indoor units are less than the difference between the set shutdown temperature and the second set value, it means that the temperatures of the evaporator tubes of the operating indoor units are low and the pressure of the multi-split air conditioning system is relatively low, then the opening degrees of the electronic expansion valves corresponding to the standby indoor units are reduced to reduce energy consumption.

In the above control method of the multi-split air conditioning system, determining that the current startup state of the multi-split air conditioning system is a warm-startup state based on the indoor environment temperature and the temperature of the evaporator tube of each of the operating indoor units includes: calculating the average temperature of the tubes based on the temperature of the evaporator tube of each of the operating indoor units; and determining that the current startup state of the multi-split air conditioning system is a warm-startup state when a difference between the average temperature of the tubes and the indoor environment temperature is greater than a third set temperature.

The control method further includes: determining that the current startup state of the multi-split air conditioning system is a cold-startup state when the difference between the average temperature of the tubes and the indoor environment temperature is less than or equal to the third set temperature.

By calculating the average temperature of the tubes based on the temperature of the evaporator tube of each of the operating indoor units, it can reflect the pressure temperature of the multi-split air conditioning system, and the calculated average value may improve the accuracy of control and reduce the possibility of misjudgment. If the difference between the average temperature of the tubes and the indoor environment temperature is greater than the third set temperature, it means that the heating has been run before the operating indoor units start and there is residual heat in the standby indoor units, then it is determined that the current startup state of the multi-split air conditioning system is a warm-startup state. If the difference between the average temperature of the tubes and the indoor environment temperature is less than or equal to the third set temperature, it means that the heating has not been run before the operating indoor units start and the pressure of the multi-split air conditioning system is relatively low, then it is determined that the current startup state of the multi-split air conditioning system is a cold-startup state.

In the above control method of the multi-split air conditioning system, before obtaining the indoor environment temperature of the space where the operating indoor units are located and the temperature of the evaporator tube of each of the operating indoor units, the control method further includes: obtaining an outdoor environment temperature; obtaining a first capacity of each of the operating indoor units and a second capacity of the outdoor unit when the outdoor environment temperature is greater than a fourth set temperature; calculating a sum of the capacities of the operating indoor units based on the first capacities of all the operating indoor units; and determining that the multi-split air conditioning system has an overheat trip shutdown risk based on the second capacity and the sum of the capacities of the operating indoor units.

When the outdoor environment temperature is greater than the fourth set temperature, it means that the multi-split air conditioning system uses the heating function in a high temperature environment. By obtaining the first capacities of all the operating indoor units and the second capacity of the outdoor unit, calculating the sum of the capacities of the operating indoor units based on the first capacities of all the operating indoor units and comparing the relationship between the second capacity and the sum of the capacities of the operating indoor units, it is determined whether the multi-split air conditioning system has the overheat trip shutdown risk or not. When it is determined that the multi-split air conditioning system has the overheat trip shutdown risk, the indoor environment temperature of the space where the operating indoor units are located and the temperature of the evaporator tube of each of the operating indoor units are obtained, and corresponding control measures are implemented to reduce the over-voltage trip shutdown problem.

In the above control method of the multi-split air conditioning system, determining that the multi-split air conditioning system has the overheat trip shutdown risk based on the second capacity and the sum of the capacities of the operating indoor units includes: determining that the multi-split air conditioning system has the overheat trip shutdown risk when the sum of the capacities of the operating indoor units is less than a product of the second capacity and a third set value.

It should be noted that if the sum of the capacities of the operating indoor units is less than the product of the second capacity and the third set value, it means that the number of started operating indoor units is too small. At this time, a heat exchange area between the indoor units is quite different from that of the outdoor unit, and it is easy to cause over-voltage trip shutdown due to insufficient heat dissipation of the indoor units in time. It thus can be determined that the multi-split air conditioning system has the overheat trip shutdown risk.

In a second aspect of the present disclosure, an embodiment provides an operating control device, including at least one control processor and a memory configured to be in communication connection with the at least one control processor, where the memory stores instructions that may be executed by the at least one control processor, and the instructions, when executed by the at least one control processor, cause the at least one control processor to execute the control method of the multi-split air conditioning system as described in the embodiments of the first aspect.

The operation control device provided in accordance with the embodiments of the present disclosure has at least the following beneficial effects. In the heating-start stage, the indoor environment temperature of the space where operating indoor units are located and temperature of the evaporator tube of each of the operating indoor units are obtained, and the current startup state of the multi-split air conditioning system is determined based on the indoor environment temperature and the temperature of the evaporator tube of each of the operating indoor units. When it is determined that the current startup state of the multi-split air conditioning system is a warm-startup state, the fans of the operating indoor units are controlled to run at a first set fan speed, which can speed up the heat dissipation of the operating indoor units, effectively reduce the over-voltage trip shutdown problem, and ensure the normal heating of the operating indoor units, thereby being beneficial to improving the user's experience.

In a third aspect of the present disclosure, an embodiment provides a multi-split air conditioning system, including the operation control device as described in the embodiments of the second aspect.

The multi-split air conditioning system provided in accordance with the embodiments of the present disclosure has at least the following beneficial effects. In the heating-start stage, the indoor environment temperature of the space where operating indoor units are located and temperature of the evaporator tube of each of the operating indoor units are obtained, and the current startup state of the multi-split air conditioning system is determined based on the indoor environment temperature and the temperature of the evaporator tube of each of the operating indoor units. When it is determined that the current startup state of the multi-split air conditioning system is a warm-startup state, the fans of the operating indoor units are controlled to run at a first set fan speed, which can speed up the heat dissipation of the operating indoor units, effectively reduce the over-voltage trip shutdown problem, and ensure the normal heating of the operating indoor units, thereby being beneficial to improving the user's experience.

In a fourth aspect of the present disclosure, an embodiment provides a computer-readable storage medium storing computer-executable instructions configured to cause a computer to execute the control method of the multi-split air conditioning system as described in the embodiments of the first aspect.

The computer-readable storage medium provided in accordance with the embodiments of the present disclosure has at least the following beneficial effects. In the heating-start stage, the indoor environment temperature of the space where operating indoor units are located and temperature of the evaporator tube of each of the operating indoor units are obtained, and the current startup state of the multi-split air conditioning system is determined based on the indoor environment temperature and the temperature of the evaporator tube of each of the operating indoor units. When it is determined that the current startup state of the multi-split air conditioning system is a warm-startup state, the fans of the operating indoor units are controlled to run at a first set fan speed, which can speed up the heat dissipation of the operating indoor units, effectively reduce the over-voltage trip shutdown problem, and ensure the normal heating of the operating indoor units, thereby being beneficial to improving the user's experience.

Additional features and advantages of the present disclosure will be set forth in the description which follows, and in part will be apparent from the description, or may be learned by practice of the present disclosure. The objectives and other advantages of the present disclosure may be realized and obtained by the structure particularly pointed out in the written description, claims and accompanying drawings.

### BRIEF DESCRIPTION OF DRAWINGS

The present disclosure will be further described below in conjunction with the accompanying drawings and embodiments.
FIG. 1 is a schematic structural view of a multi-split air conditioning system provided by Embodiment 1 of the present disclosure;
FIG. 2 is a flow chart of a control method of a multi-split air conditioning system provided by Embodiment 2 of the present disclosure;
FIG. 3 is a flow chart of a control method of a multi-split air conditioning system provided by Embodiment 3 of the present disclosure;
FIG. 4 is a flow chart of a control method of a multi-split air conditioning system provided by Embodiment 4 of the present disclosure;
FIG. 5 is a flow chart of a control method of a multi-split air conditioning system provided by Embodiment 5 of the present disclosure;
FIG. 6 is a flow chart of a control method of a multi-split air conditioning system provided by Embodiment 6 of the present disclosure;
FIG. 7 is a flow chart of a control method of a multi-split air conditioning system provided by Embodiment 7 of the present disclosure;
FIG. 8 is a flow chart of a control method of a multi-split air conditioning system provided by Embodiment 8 of the present disclosure;
FIG. 9 is a flow chart of a control method of a multi-split air conditioning system provided by Embodiment 9 of the present disclosure;
FIG. 10 is a flow chart of a control method of a multi-split air conditioning system provided by Embodiment 10 of the present disclosure;
FIG. 11 is a flow chart of a control method of a multi-split air conditioning system provided by Embodiment 11 of the present disclosure;
FIG. 12 is a flow chart of a control method of a multi-split air conditioning system provided by Embodiment 12 of the present disclosure;
FIG. 13 is a flow chart of a control method of a multi-split air conditioning system provided by Embodiment 13 of the present disclosure;
FIG. 14 is a flow chart of a control method of a multi-split air conditioning system provided by Embodiment 14 of the present disclosure;
FIG. 15 is a flow chart of a control method of a multi-split air conditioning system in a cold control mode provided by Embodiment 15 of the present disclosure;
FIG. 16 is a flow chart of a control method of a multi-split air conditioning system in a warm control mode provided by Embodiment 16 of the present disclosure; and
FIG. 17 is a schematic structural view of an operation control device provided by Embodiment 17 of the present disclosure.

### DETAILED DESCRIPTION

This section will describe the specific embodiments of the present disclosure in detail. The preferred embodiments of the present disclosure are shown in the accompanying drawings. The accompanying drawings are provided for a supplement of the description of the text part of the specification with graphics, such that a person having ordinary skill in the art can intuitively and vividly understand each technical feature and overall technical solution of the present disclosure, but it should not be understood to limit the scope of protection of the present disclosure.

It should be understood that in the description of the embodiments of the present disclosure, if described, the terms such as "first," "second" are merely for the purpose of distinguishing technical features, and not to be construed as indicating or implying relative importance or implicitly indicating the number of technical features indicated or implicitly indicating the precedence relationship of technical features indicated. The meaning of "at least one" refers to one or more, "a plurality of" refers to two or more. The terms such as "greater than," "less than," "over" are understood not to include the specified number, while the terms such as "above," "below," "within" are understood to include the specified number. The meaning of "several" is one or more, unless otherwise expressly and specifically limited.

Furthermore, unless otherwise expressly specified and defined, the term "connection/connecting" shall be understood in the broad sense. For example, it may be a fixed connection or an active connection, and it may also be a detachable connection or a non-detachable connection, or an integrated connection. It may be a mechanical connection, an electrical connection or mutual communication. It may be connected directly, or may also be connected indirectly through an intermediary. It should be noted that although a logical sequence is shown in the flowchart, in some cases, the steps shown or described may be performed in an order different from that in the flowchart.

It should be noted that the technical features involved in various embodiments of the present disclosure described below may be combined with each other as long as they do not conflict with each other.

The control method of the multi-split air conditioning system, the control device and the multi-split air conditioning system provided by the embodiments of the present disclosure can effectively reduce the over-voltage trip shutdown problem.

The embodiments of the present disclosure will be further described below with reference to the accompanying drawings.

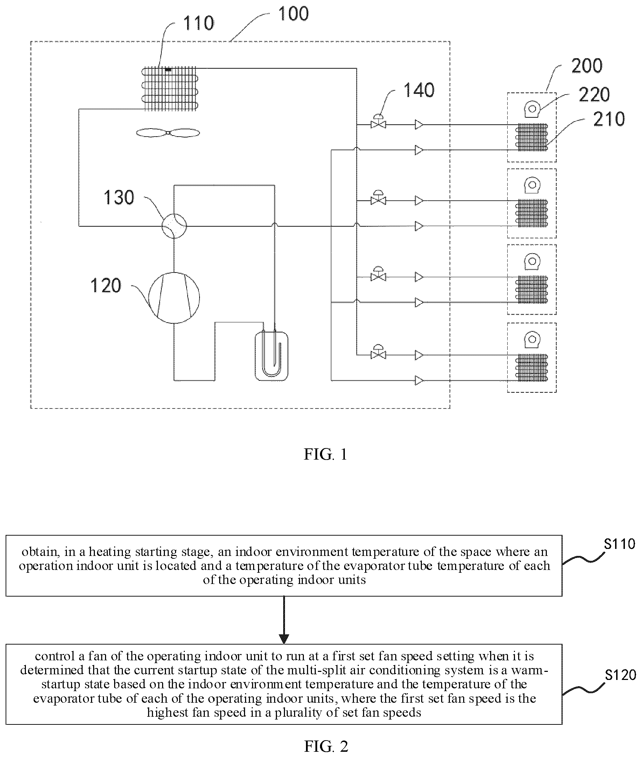

As shown in FIG. 1, FIG. 1 shows a schematic structural view of a multi-split air conditioning system. The multi-split air conditioning system includes an outdoor unit 100 and a plurality of indoor units 200. The indoor unit 200 include an evaporator 210 and a fan 220 disposed at the evaporator 210. The outdoor unit 100 includes a condenser 110, a compressor 120, a four-way valve 130 and a plurality of electronic expansion valves 140. Each electronic expansion valve 140 is connected to a corresponding evaporator 210 respectively. The electronic expansion valves 140 are configured to adjust the refrigerant flow. The compressor 120 is connected to the four-way valve 130 that is connected to the condenser 110 and the evaporator 210 of each indoor unit 200 respectively. The four-way valve 130 is configured to reverse the refrigerant cycle, thereby realizing the switching between a refrigeration running mode and a heating running mode.

Those having ordinary skill in the art may understand that the multi-split air conditioning system shown in FIG. 1 does not limit the embodiments of the present disclosure, and may include more or less components than shown in the figure, or combine certain components, or have different component arrangements.

As shown in FIG. 2, based on the multi-split air conditioning system in FIG. 1, at least one of the plurality of indoor units is an operating indoor unit in a running state. The operating indoor unit may also be referred to an indoor unit with a capacity demand. The capacity demand means that there is a difference between a set temperature of the indoor unit and the indoor environment temperature, which requires the outdoor unit to operate to provide a load so that the indoor environment temperature meets a user requirement or a functional requirement. The embodiments of the first aspect of the present disclosure provide a control method of a multi-split air conditioning system, including but being not limited to S110 and S120.

At S110, in a heating-start stage, both an indoor environment temperature of the space where an operating indoor unit is located and a temperature of the evaporator tube of each of the operating indoor units are obtained.

It should be noted that since the multi-split air conditioning system has different running states, when the multi-split air conditioning system starts the heating function, the operating indoor units start to operate. By obtaining the temperature of the evaporator tube of each of the operating indoor units, the pressure temperature of the multi-split air conditioning system may be represented. If the heating has been run before starting the operating indoor units, heat will accumulate in the operating indoor units, and the temperatures of the evaporator tubes will be relatively high, such that there is a certain difference between the temperatures of the evaporator tubes and the indoor environment temperature of the space where the operating indoor units are located.

At S120, a fan of the operating indoor unit is controlled to run at a first set fan speed when it is determined that the current startup state of the multi-split air conditioning system is a warm-startup state based on the indoor environment temperature and the temperature of the evaporator tube of each of the operating indoor units. The first set fan speed is the highest fan speed in a plurality of set fan speeds.

It can be understood that the current startup state of the multi-split air conditioning system may be determined based on the indoor environment temperature of the space where any operating indoor unit is located and the temperature of the evaporator tube of each of the operating indoor units. If the current startup state of the multi-split air conditioning system is a warm-startup state, it means that the heating has been operated by the multi-split air conditioning system before starting this heating. The reason may be that the multi-split air conditioning system has just terminated the heating mode and then restarted soon, or the multi-split air conditioning system restarted due to fault protection trip shutdown. The indoor units usually activate the anti-cold wind function in the heating-start stage. The anti-cold wind function refers to controlling the fans of the indoor units to be turned on with a delay or in the breeze state. When it is determined that the current startup state of the multi-split air conditioning system is the warm-startup state, if at this time, the heating function is started again, since the operating indoor units accumulate a relatively large amount of heat and cannot dissipate heat in time, it is easy to make the pressure of the multi-split air conditioning system increase rapidly, thereby resulting in an over-voltage trip shutdown. Since the first set fan speed is the highest fan speed in the plurality of set fan speeds, by controlling the fans of the operating indoor units to run at the first set fan speed, that is, controlling the fans of the operating indoor units to run at the highest fan speed, heat dissipation may be speeded up and the running reliability of the operating indoor units may be improved by running at a high wind fan speed directly at the initial startup.

In the above control method of the multi-split air conditioning system provided by the embodiments of the first aspect, in the heating-start stage, the indoor environment temperature of the space where operating indoor units are located and temperature of the evaporator tube of each of the operating indoor units are obtained, and the current startup state of the multi-split air conditioning system is determined based on the indoor environment temperature and the temperature of the evaporator tube of each of the operating indoor units. When it is determined that the current startup state of the multi-split air conditioning system is a warm-startup state, the fans of the operating indoor units are controlled to run at a first set fan speed, which can speed up the heat dissipation of the operating indoor units, effectively avoid the over-voltage trip shutdown problem, and ensure the normal heating of the operating indoor units, thereby being beneficial to improving the user's experience.

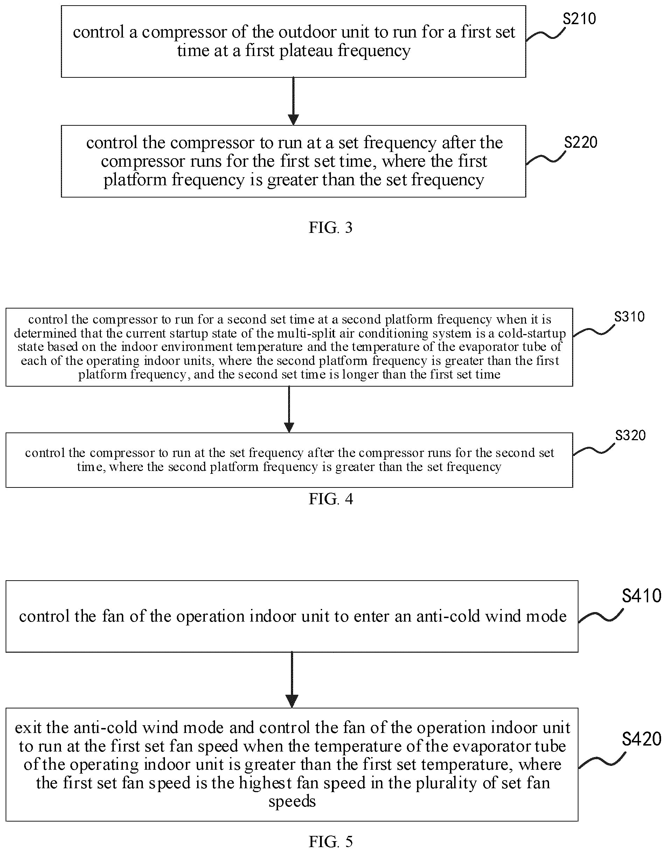

As shown in FIG. 3, in the above control method of the multi-split air conditioning system, when it is determined that the current startup state of the multi-split air conditioning system is the warm-startup state, the control method of the multi-split air conditioning system further includes but is not limited to S210 and S220.

At S210, a compressor of the outdoor unit is controlled to run for a first set time at a first platform frequency.

At S220, the compressor is controlled to run at a set frequency after the compressor runs for the first set time. The first platform frequency is greater than the set frequency.

When the multi-split air conditioning system uses the heating function in a high-temperature environment, especially when only a small number of operating indoor units are started, in order to prevent an over-voltage trip shutdown for protection due to long-term high-frequency running of the compressor, the measures are usually taken to directly run the system at a target low frequency, but this will produce a small suction and exhaust pressure difference of the multi-split air conditioning system, which is lower than the reversing driving force of the four-way valve. The four-way valve fails to complete the reversal, and causes air blowby, resulting in the multi-split air conditioning system being unable to heat normally. When it is determined that the current startup state of the multi-split air conditioning system is the warm-startup state, according to the embodiments of the present disclosure, it is ensured that the four-way valve may change a direction normally by controlling the compressor of the outdoor unit to run for the first set time at the first platform frequency in the heating-start stage. After the compressor runs for the first set time, the compressor is then controlled to run at a lower set frequency to assure that the multi-split air conditioning system may heat normally, avoid rapid frequency increase of the compressor, and reduce high-frequency running time, which can effectively avoid the over-voltage trip shutdown problem.

It should be noted that the set frequency is the lowest heating frequency, the first platform frequency is usually a relatively high frequency, and the first set time is usually a short set time. It can be understood that in the heating-start stage, the compressor is controlled to run at the first starting platform, that is, the compressor is controlled to run for the first set time at the first platform frequency. On the premise of ensuring that the four-way valve may be reversed, the compressor is controlled to run for a short time at a high frequency, such that the multi-split air conditioning system has a pressure difference, and then the compressor immediately runs at the set frequency, thereby reducing the occurrence of over-voltage trip shutdown on the premise of ensuring the multi-split air conditioning system to run the heating function normally.

As shown in FIG. 4, in the above control method of the multi-split air conditioning system, the control method further includes but is not limited to S310 and S320.

At S310, the compressor is controlled to run for a second set time at a second platform frequency when it is determined that the current startup state of the multi-split air conditioning system is a cold-startup state based on the indoor environment temperature and the temperature of the evaporator tube of each of the operating indoor units. The second platform frequency is greater than the first platform frequency, and the second set time is longer than the first set time.

At S320, the compressor is controlled to run at the set frequency after the compressor runs for the second set time. The second platform frequency is greater than the set frequency.

When it is determined that the current startup state of the multi-split air conditioning system is a cold-startup state based on the indoor environment temperature and the temperature of the evaporator tube of each of the operating indoor units, the compressor of the outdoor unit is controlled to run for the second set time at the second platform frequency to ensure that the four-way valve may reverse direction normally. After the compressor runs for the second set time, the compressor is then controlled to run at a lower set frequency to assure that the multi-split air conditioning system may heat normally, and avoid rapid frequency increase of the compressor, which can effectively reduce the over-voltage trip shutdown problem.

It should be noted that the set frequency is the lowest heating frequency, the second platform frequency is usually a relatively high frequency, and the second set time is usually a short set time. It can be understood that in the heating-start stage, the compressor is controlled to run at the second starting platform, that is, the compressor is controlled to run for the second set time at the second platform frequency, thereby reducing the occurrence of over-voltage trip shutdown on the premise of ensuring the multi-split air conditioning system to run the heating function normally.

It can be understood that the current startup state of the multi-split air conditioning system includes the warm-startup state and the cold-startup state. For the two different current startup states, the compressor is controlled by different control measures in the heating-start stage. When it is determined that the current startup state of the multi-split air conditioning system is the warm-startup state, the compressor of the outdoor unit runs for the first set time at the first platform frequency. After the compressor runs for the first set time, the compressor is controlled to run at the set frequency. When it is determined that the current startup state of the multi-split air conditioning system is the cold-startup state, the compressor is controlled to run for the second set time at the second platform frequency. After the compressor runs for the second set time, the compressor is controlled to run at the set frequency. Since the pressure is relatively high when the current startup state of the multi-split air conditioning system is the warm-startup state, the first platform frequency and the first setting time may be appropriately set in such way that the second platform frequency is greater than the first platform frequency, and the second set time is longer than the first set time to ensure the working stability of the multi-split air conditioning system.

As shown in FIG. 5, in the above control method of the multi-split air conditioning system, when it is determined that the current startup state of the multi-split air conditioning system is a cold-startup state, the control method of the multi-split air conditioning system further includes but is not limited to step a S410 and S420.

At S410, the fan of the operating indoor unit is controlled to enter an anti-cold wind mode.

At S420, the anti-cold wind mode is terminated and the fan of the operating indoor unit is controlled to run at the first set fan speed when the temperatures of the evaporator tube of the operating indoor unit is greater than the first set temperature. The first set fan speed is the highest fan speed in the plurality of set fan speeds.

In the heating-start stage, when it is determined that the current startup state of the multi-split air conditioning system is the cold-startup state, the temperatures of the evaporator tubes of the operating indoor units are relatively low and usually roughly equivalent to the indoor environment temperature. At this time, the multi-split air conditioning system is within a stable pressure range, the fans of the operating indoor units may be controlled firstly to enter the anti-cold wind mode to avoid the problem of cold wind blowing out in the initial starting stage to affect the user's comfort. When the operating indoor units are operated for a period of time, the temperatures of the evaporator tubes will gradually increase. When the temperatures of the evaporator tubes of the operating indoor units are greater than the first set temperature, then the anti-cold wind mode is exited, and the fans of the operating indoor units are controlled to run at the first set fan speed. That is, the fans of the operating indoor units are controlled to run at the highest fan speed to speed up the heat dissipation of the operating indoor units, assure the stable operation of the operating indoor units in the process of heating, avoid the occurrence of the over-voltage overheat trip shutdown, and ensure good heating effects.

It should be noted that the fans of the operating indoor units may be controlled to enter the anti-cold wind mode by starting the fans after the operating indoor units have been running for a period of time, or controlling the fans to enter the breeze state. The first set temperature is the anti-cold wind temperature. If the temperatures of the evaporator tubes of the operating indoor units are less than or equal to the first set temperature, it means that the internal temperatures of the operating indoor units are relatively low. At this time, if the fans are turned on or the fans are set to run at a high fan speed, the cold air blown by the fans may easily make users feel uncomfortable. If the temperatures of the evaporator tubes of the operating indoor units are greater than the first set temperature, the air blown by the fans will not make the user feel uncomfortable. At this time, the anti-cold wind mode may be exited to control the fans of the operating indoor units to run at the first set fan speed to ensure the working reliability of the operating indoor units, and at the same time improve the heating effect of the operating indoor units.

In the above control method of the multi-split air conditioning system, the control method further includes a following steps.

A running fan speed of the fan to is switched from the first set fan speed to the second set fan speed when preset conditions are met.

The preset conditions include at least one of:
- the time for which the fan runs at the first set fan speed is longer than a third set time; and
- the time during which the temperatures of the evaporator tubes of the operating indoor units have been within a preset temperature range being longer than a fourth set time.

It should be noted that the first set fan speed is greater than the second set fan speed. When the operating indoor units run for a period of time at the first set fan speed, the heating capacities of the operating indoor units may be increased. When the preset conditions are met, the running fan speed of the fans may be switched to lower to the second set fan speed. The first set fan speed is the highest fan speed, and the second set fan speed is usually the low fan speed or the middle fan speed set by the user.

When the fans are running at the first set fan speed, a timer is started and the time is recorded as the first running time. The first running time is a period during which the fans continue to run at the first set fan speed. When the first running time is longer than the third set time, the running fan speed of the fans is switched from the first set fan speed to the second set fan speed. **In** the process of heating of the operating indoor units, the temperatures of the evaporator tubes gradually increase and fall within the preset temperature range. When the temperatures of the evaporator tubes of the operating indoor units are within the preset temperature range, the timer is started and the time is recorded as the second running time. The second running time is a period during which the temperatures of the evaporator tubes of the operating indoor units have been within the preset temperature range. When the second running time is longer than the fourth set time, it means that the temperatures of the evaporator tubes of the operating indoor units have stabilized and reached the heating target range. At this time, the running fan speed of the fans may be switched from the first set fan speed to the second set fan speed to reduce energy consumption.

It should be noted that when a power outage occurs during the first running time or the temperatures of the evaporator tubes reach the heating target temperature, then the first running time will be cleared.

It can be understood that the current startup state of the multi-split air conditioning system includes the warm-startup state and the cold-startup state. For the two different current startup states, different control measures are taken for the operating indoor units in the heating-start stage. When it is determined that the current startup state of the multi-split air conditioning system is the warm-startup state, the fans of the operating indoor units are controlled to run at the first set fan speed. When it is determined that the current startup state of the multi-split air conditioning system is the cold-startup state, firstly, the fans of the operating indoor units are controlled to enter the anti-cold wind mode. When the temperatures of the evaporator tubes of the operating indoor units are greater than the first set temperature, the fans of the operating indoor units are then controlled to run at the first set fan speed. The working stability of the multi-split air conditioning system is ensured by controlling the fans of the operating indoor units based on the different current startup states of the multi-split air conditioning system.

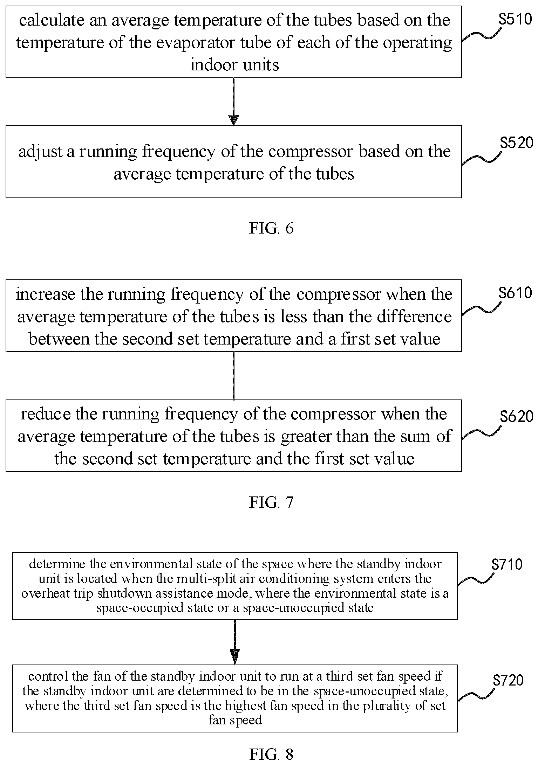

As shown in FIG. 6, in the above control method of the multi-split air conditioning system, after the compressor is controlled to run at a set frequency, the control method of the multi-split air conditioning system further includes but is not limited to S510 and S520.

At S510, an average temperature of the tubes is calculated based on the temperature of the evaporator tube of each of the operating indoor units.

At S520, a running frequency of the compressor is adjusted based on the average temperature of the tube.

It should be noted that by controlling the compressor to run at the set frequency, over-voltage trip shutdown may be reduced, and then the running frequency of the compressor is corrected based on the temperatures of the evaporator tubes of the operating indoor units. The average temperature of the tubes is calculated and obtained based on the temperatures of the evaporator tubes of all operating indoor units, and the running frequency of the compressor is adjusted based on the average temperature of the tubes to ensure that the compressor runs in a normal heating state. The accuracy of control may be improved by calculating the average temperature of the tubes.

As shown in FIG. 7, in the above control method of the multi-split air conditioning system, at S520, adjusting the running frequency of the compressor based on the average temperature of the tubes includes but is not limited to S610 and S620.

At S610, the running frequency of the compressor is increased when the average temperature of the tubes is less than a difference between the second set temperature and a first set value.

At S620, the running frequency of the compressor is reduced when the average temperature of the tubes is greater than a sum of the second set temperature and the first set value.

It should be noted that the second set temperature is the heating target temperature, and the first set value is a correction value, which can make the current heating temperature fall within the heating target range. If the average temperature of the tubes is less than the difference between the second set temperature and the first set value, it means that the current heating temperature is not high enough, then the running frequency of the compressor is increased, i.e., upscaling correction. The running frequency of the compressor is adjusted one fan speed at a time.

If the average temperature of the tubes is greater than the sum of the second set temperature and the first set value, it means that the current heating temperature has exceeded the heating target range, then the running frequency of the compressor is reduced, i.e., down correction. The running frequency of the compressor is adjusted one fan speed at a time. If the average temperature of the tubes is greater than or equal to the difference between the second set temperature and the first set value, and less than or equal to the sum of the second set temperature and the first set value, it means that the current heating temperature falls within the heating target range, and there is no need to adjust the running frequency of the compressor.

In the above control method of the multi-split air conditioning system, at least one of the plurality of indoor units is a standby indoor unit which is in a standby state, and the control method of the multi-split air conditioning system further includes the following a steps.

The multi-split air conditioning system is controlled to enter an overheat trip shutdown assistance mode to assist in reducing the pressure of the multi-split air conditioning system through the standby indoor units or the outdoor unit when the temperatures of the evaporator tubes of the operating indoor units are greater than the difference between a set shutdown temperature and a second set value.

It should be noted that at least one of the plurality of indoor units is a standby indoor unit which is in a standby state. The standby indoor unit has no capacity demand and does not need to run to heat. When the temperatures of the evaporator tubes of the operating indoor units are greater than the set shutdown temperature, the multi-split air conditioning system will shut down due to triggering a high-voltage protection. The second set value is a correction value configured to trigger the overheat trip shutdown assistance mode before the over-voltage protection trip shutdown occurs in the multi-split air conditioning system.

If the temperatures of the evaporator tubes of the operating indoor units are greater than the difference between the set shutdown temperature and the second set value, it means that the temperature of the evaporator tube is too high and the pressure of the multi-split air conditioning system is relatively high, that is, the multi-split air conditioning system is at risk of overheat trip shutdown, and the temperatures of the evaporator tubes of the operating indoor units will soon reach the set shutdown temperature. To avoid the over-voltage trip shutdown of the multi-split air conditioning system, the multi-split air conditioning system is controlled to enter the overheat trip shutdown assistance mode, that is, the pressure of the multi-line air conditioning system is reduced with the help of the standby indoor units or the outdoor unit.

It can be understood that when there is a risk of overheat trip shutdown in the multi-split air conditioning system, the operating indoor units may seek assistance from the standby indoor units or the outdoor unit. For example, the standby indoor units may be configured to control a start of the fan, or the outdoor unit may be configured to adjust the corresponding electronic expansion valves to reduce the high voltage.

It should be noted that the standby indoor units communicate with the operating indoor units through the outdoor unit. The communication methods include but are not limited to limited communication and wireless communication. If the temperatures of the evaporator tubes of the operating indoor units are greater than the difference between the set shutdown temperature and the second set value, then the overheat trip shutdown assistance mode is triggered. At this time, the operating indoor units send an overheat trip shutdown assistance signal to the outdoor unit, and the outdoor unit forwards the overheat trip shutdown assistance signal to all the standby indoor units, such that the standby indoor units perform the corresponding voltage reduction control measures.

In the above control method of the multi-split air conditioning system, when the temperatures of the evaporator tubes of the operating indoor units are greater than the set shutdown temperature, the compressor is controlled to shut down, and the fans of the standby indoor units are controlled to run at the second set fan speed for a fifth set time.

It should be noted that if the temperatures of the evaporator tubes of the operating indoor units are greater than the set shutdown temperature, the pressure of the multi-split air conditioning system is too high at this time. In order to protect the equipment in the multi-split air conditioning system, the operating indoor units send a high-temperature protection signal to the outdoor unit to shut down the compressor, and control the fans of the operating indoor units to run at the second set fan speed for the fifth set time. In addition, after the fans of the operating indoor units run for the fifth set time, the fans are turned off. Then, the fans are restarted, or the settings of the fans are adjusted to clear the high-temperature protection signal.

As shown in FIG. 8, in the above control method of the multi-split air conditioning system, the control method further includes but is not limited to S710 and S720.

At S710, an environmental state of a space where the standby indoor unit is located is determined when the multi-split air conditioning system enters the overheat trip shutdown assistance mode. The environmental state includes a space-occupied state and a space-unoccupied state.

At S720, the fan of the standby indoor unit is controlled to run at a third set fan speed if the standby indoor unit is determined to be in a space-unoccupied state. The third set fan speed is the highest fan speed in the plurality of set fan speeds.

If the temperatures of the evaporator tubes of the operating indoor units are greater than the difference between the set shutdown temperature and the second set value, the multi-split air conditioning system enters the overheat trip shutdown assistance mode to determine the environmental state of the space where the standby indoor units are located. If the standby indoor units are in the space-unoccupied state, the fans of the standby indoor units may be controlled to run at the third set fan speed, that is, the fans of the standby indoor units are controlled to run at the highest fan speed, helping reduce the pressure of the multi-split air conditioning system. The fans of the standby indoor units may be operated in the space-unoccupied state to avoid affecting the user during the running of the fans.

It should be noted that the third set fan speed may be equal to the first set fan speed.

If the standby indoor units are in a space-occupied state, the fans are not turned on even if the multi-split air conditioning system enters the overheat trip shutdown assistance mode. It can be understood that if the standby indoor units receive the overheat trip shutdown assistance signal forwarded by the outdoor unit and the standby indoor units are in a space-occupied state, the fans are turned off. If the standby indoor units are in a space-unoccupied state and do not receive the overheat trip shutdown assistance signal, the fans are turned off.

It should be noted that human detection equipment such as infrared equipment or radar equipment may be configured in a space where all the indoor units are located to detect whether there are people in the space where the indoor units are located. When the multi-split air conditioning system enters the overheat trip shutdown assistance mode, that is, the standby indoor units receive the overheat trip shutdown assistance signal, if the human detection equipment fails or the human detection equipment is not configured in the space where the standby indoor units are located, that is, the detection signal cannot be obtained, at this time, it is not possible to determine whether the space where the standby indoor units are located is occupied. Then, it is presumed that the standby indoor units are in a space-occupied state, and the fans of the standby indoor units will not be triggered to start. This avoids affecting the user during the operation of the fans and is conducive to improving the universality of the control logic.

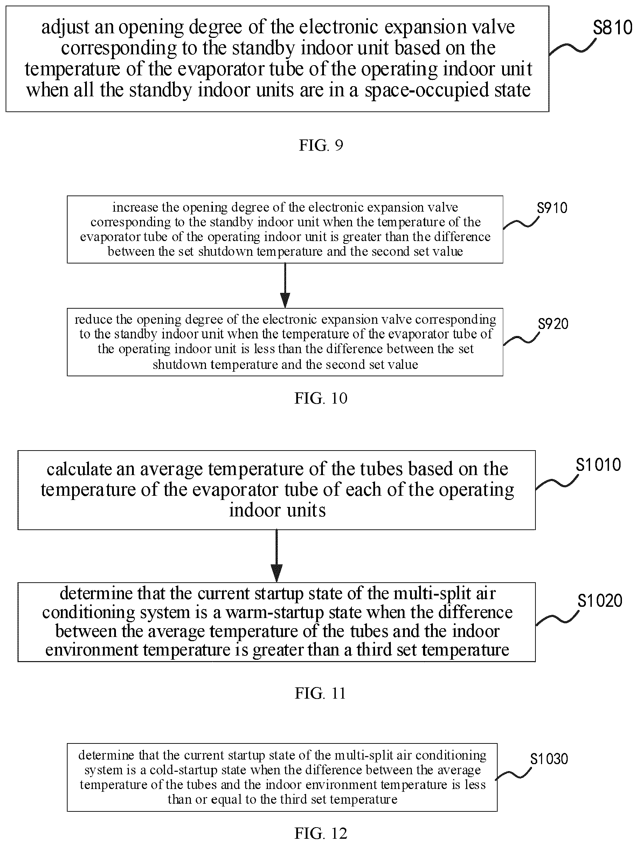

As shown in FIG. 9, in the above control method of the multi-split air conditioning system, the outdoor unit has a plurality of electronic expansion valves corresponding to the indoor units, and when the multi-split air conditioning system enters the overheat trip shutdown assistance mode, the control method of the multi-split air conditioning system further includes but is not limited to S810.

At S810, an opening degree of the electronic expansion valve corresponding to the standby indoor unit is adjusted based on the temperature of the evaporator tube of the operating indoor unit when all the standby indoor units are in a space-occupied state.

It should be noted that when the multi-split air conditioning system enters the overheat trip shutdown assistance mode, the fans are turned off due to the standby indoor units being in the space-occupied state. If all the standby indoor units are in the space-occupied state, without turning on the fans, the outdoor unit adjusts the opening degrees of the electronic expansion valves corresponding to the standby indoor units, thus helping reduce the pressure of the multi-split air conditioning system. Since the overheat trip shutdown assistance mode is triggered by the operating indoor units, the accuracy of control is ensured by obtaining the temperature of the evaporator tube of the operating indoor units, and adjusting the opening degrees of the electronic expansion valves corresponding to the standby indoor units based on the temperatures of the evaporator tubes of the operating indoor units.

It should also be noted that if the standby indoor units do not receive the overheat trip shutdown assistance signal and the multi-split air conditioning system does not enter the overheat trip shutdown assistance mode, the electronic expansion valves corresponding to the operating indoor units are controlled normally, so that the standby indoor units maintain a heating standby opening degree.

As shown in FIG. 10, in the above control method of the multi-split air conditioning system, S810, i.e., an opening degree of the electronic expansion valve corresponding to the standby indoor unit is adjusted based on the temperatures of the evaporator tubes of the operating indoor units, includes but is not limited to S910 and S920.

At S910, the opening degree of the electronic expansion valve corresponding to the standby indoor unit is increased when the temperature of the evaporator tube of the operating indoor unit is greater than the difference between the set shutdown temperature and the second set value.

At S920, the opening degree of the electronic expansion valve corresponding to the standby indoor unit is reduced when the temperature of the evaporator tube of the operating indoor unit is less than the difference between the set shutdown temperature and the second set value.

If the temperatures of the evaporator tubes of the operating indoor units are greater than the difference between the set shutdown temperature and the second set value, it means that the temperatures of the evaporator tubes of the operating indoor units are too high, and the pressure of the multi-split air conditioning system is relatively high. Then, the openings of the electronic expansion valves corresponding to the standby indoor units is increased to improve the refrigerant flow, and accelerate the pressure reduction of the multi-split air conditioning system. If the temperatures of the evaporator tubes of the operating indoor units are less than the difference between the set shutdown temperature and the second set value, it means that the temperatures of the evaporator tubes of the operating indoor units are low and the pressure of the multi-split air conditioning system is relatively low. Then, the opening degrees of the electronic expansion valves corresponding to the standby indoor units is reduced to reduce energy consumption.

In an embodiment, when the temperatures of the evaporator tubes of the operating indoor units are greater than the difference between the set shutdown temperature and the second set value, the electronic expansion valves corresponding to the standby indoor units increase the first opening degree after a sixth set time. When the temperatures of the evaporator tubes of the operating indoor units are less than the difference between the set shutdown temperature and the second set value, the electronic expansion valves corresponding to the standby indoor units decrease the second opening degree after the sixth set time. The opening degree may be minimized to the heating standby opening degree.

As shown in FIGS. 11 and 12, in the above control method of the multi-split air conditioning system, S120, i.e., the current startup state of the multi-split air conditioning system is determined as a warm-startup state based on the indoor environment temperature and the temperature of the evaporator tube of each of the operating indoor units, includes but is not limited to S1010 and S1020.

At S1010, an average temperature of the tubes is calculated based on the temperature of the evaporator tube of each of the operating indoor units.

At S1020, the current startup state of the multi-split air conditioning system is determined as a warm-startup state when the difference between the average temperature of the tubes and the indoor environment temperature is greater than a third set temperature.

The pressure temperature of the multi-split air conditioning system is reflected by calculating the average temperature of the tubes based on the temperature of the evaporator tube of each of the , and the calculated average value may improve the accuracy of control and reduce the possibility of misjudgment. If the difference between the average temperature of the tubes and the indoor environment temperature is greater than the third set temperature, it means that the heating has been run before the operating indoor units are started and there is residual heat in the standby indoor units, and it is determined that the current startup state of the multi-split air conditioning system is a warm-startup state.

The control method of the multi-split air conditioning system further includes a following step.

At S1030, the current startup state of the multi-split air conditioning system is determined as the cold-startup state when the difference between the average temperature of the tubes and the indoor environment temperature is less than or equal to the third set temperature.

If the difference between the average temperature of the tubes and the indoor environment temperature is less than or equal to the third set temperature, it means that the heating has not been run before the operating indoor units are started and the pressure of the multi-split air conditioning system is relatively low, and it is determined that the current startup state of the multi-split air conditioning system is the cold-startup state.

It can be understood that when the difference between the average temperature of the tubes and the indoor environment temperature is greater than the third set temperature, the current startup state of the multi-split air conditioning system is determined to be the warm-startup state, and the multi-split air conditioning system is controlled to enter the warm control mode. When the difference between the average temperature of the tubes and the indoor environment temperature is less than or equal to the third set temperature, the current startup state of the multi-split air conditioning system is determined to be the cold-startup state, and the multi-split air conditioning system is controlled to enter the cold control mode.

It should be noted that if there is only one operating indoor unit, the average temperature of the tubes is the temperature of the evaporator tube of the operating indoor unit. If there are a plurality of operating indoor units, the average temperature of the tubes is an average of all the operating indoor units.

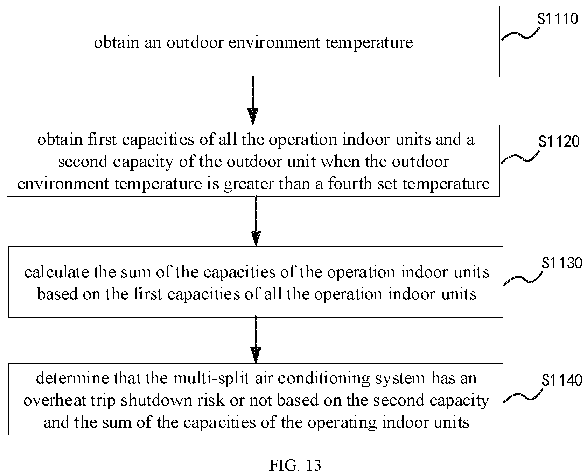

As shown in FIG. 13, in the above control method of the multi-split air conditioning system, S110, i.e., before the indoor environment temperature of the space where the operating indoor units are located and the temperature of the evaporator tube of each of the operating indoor units are obtained, the control method of the multi-split air conditioning system further includes but is not limited to following steps S1110 to S1140.
At S1110, an outdoor environment temperature is obtained.
At S1120, a first capacity of each of the operating indoor units and a second capacity of the outdoor unit are obtained when the outdoor environment temperature is greater than a fourth set temperature;
At S1130, a sum of the capacities of the operating indoor units is calculated based on the first capacities of all the operating indoor units; and
At S1140, the multi-split air conditioning system is determined whether to have an overheat trip shutdown risk or not based on the second capacity and the sum of the capacities of the operating indoor units.

For the multi-split air conditioning system, since there are many possible combinations of indoor units. If the heat exchange area of the indoor units is quite different from that of the outdoor unit, and the multi-split air conditioning system runs the heating function in a high-temperature environment, it is easy to trigger the high-voltage protection and shut down. When the obtained outdoor environment temperature is greater than the fourth set temperature, it means that the multi-split air conditioning system runs the heating function in the high temperature environment. The multi-split air conditioning system is determined whether to have the overheat trip shutdown risk or not by obtaining the first capacities of all the operating indoor units and a second capacity of the outdoor unit, calculating the sum of the capacities of the operating indoor units based on the first capacities of all the operating indoor units, and comparing a relationship between the second capacity and the sum of the capacities of the operating indoor units. When it is determined that the multi-split air conditioning system has the overheat trip shutdown risk, the indoor environment temperature of the space where the operating indoor units are located and the temperature of the evaporator tube of each of the operating indoor units are obtained, and corresponding control measures are implemented to reduce the over-voltage trip shutdown problem.

In the above control method of the multi-split air conditioning system, S1140, i.e., the multi-split air conditioning system is determined to have the overheat trip shutdown risk based on the second capacity and the sum of the capacities of the operating indoor units, includes a following step.

The multi-split air conditioning system is determined to have the overheat trip shutdown risk when the sum of the capacities of the operating indoor units is less than a product of the second capacity and a third set value which is a coefficient less than 1.

It should be noted that if the sum of the capacities of the operating indoor units is less than the product of the second capacity and the third set value, it means that the number of started operating indoor units is too small. At this time, the heat exchange area of the indoor units is quite different from that of the outdoor unit, and it is easy to cause the over-voltage trip shutdown due to insufficient heat dissipation of the indoor units in time. It thus can be determined that the multi-split air conditioning system has the overheat trip shutdown risk.

It should be noted that if the sum of the capacities of the operating indoor units is greater than or equal to the product of the second capacity and the third set value, it can be determined that there is no risk of overheat trip shutdown in the multi-split air conditioning system, and the multi-split air conditioning system maintains a normal heating control mode.

In order to more clearly explain the control method of the multi-split air conditioning system of the present disclosure, two cases will be used below for further introduction: the current startup state of the multi-split air conditioning system is the cold-startup state, and the current startup state of the multi-split air conditioning system is the warm-startup state.

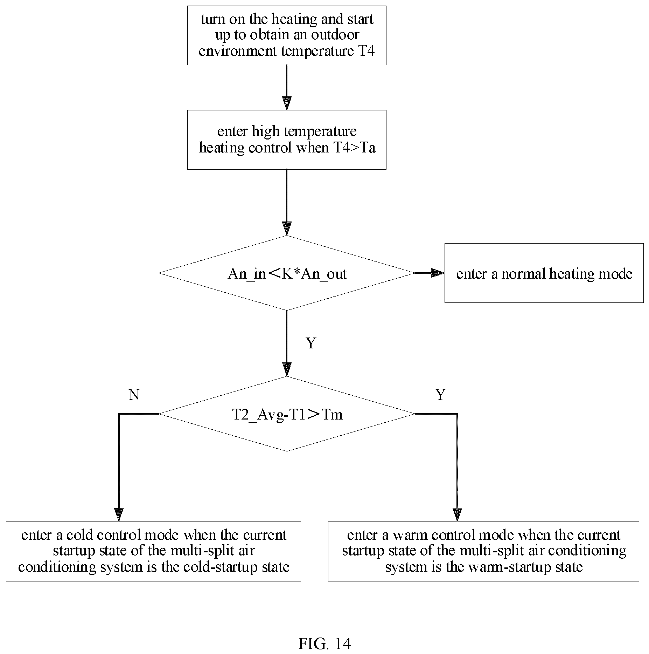

As shown in FIG. 14, the current startup state of the multi-split air conditioning system is first determined. The control method of the multi-split air conditioning system of the present disclosure is as follows
1. The system is turned on for heating, and an outdoor environment temperature T4 is obtained.
2. The system enters a high temperature heating control mode when T4>Ta. Ta is the fourth set temperature. In this embodiment, Ta has a value of 20°C, and a range of Ta may be 16-26°C.
3. The values of An_in and K*An_out are compared. If An_in < K*An_out, a step 4 is executed, and if An_in ≥ K*An_out, a step 5 is executed, where An_in is the sum of the capacities of the operating indoor units, and calculated and obtained based on the first capacities of all the operating indoor units, and An_out is the second capacity of the outdoor unit. K is the third set value. In this embodiment, K has a value of 0.25, and a range of K is 0.18-0.4.
4. The values of T2_Avg-T1 and Tm are compared. If T2_Avg-T1>Tm, a step 6 is executed, and if T2_Avg-T1 ≤ Tm, a step 7 is executed, where T2 is the temperatures of the evaporator tubes of the indoor units. T2_Avg is the average value of T2 of all the operating indoor units, T1 is the indoor environment temperature of the space where the operating indoor unit are located, Tm is the third set temperature. In this embodiment, Tm has a value of 5°C, and the range is 3-10°C.
5. The system enters a normal heating mode.
6. The system enters the warm control mode when the current startup state of the multi-split air conditioning system is the warm-startup state.
7. The system enter the cold control mode when the current startup state of the multi-split air conditioning system is the cold-startup state.

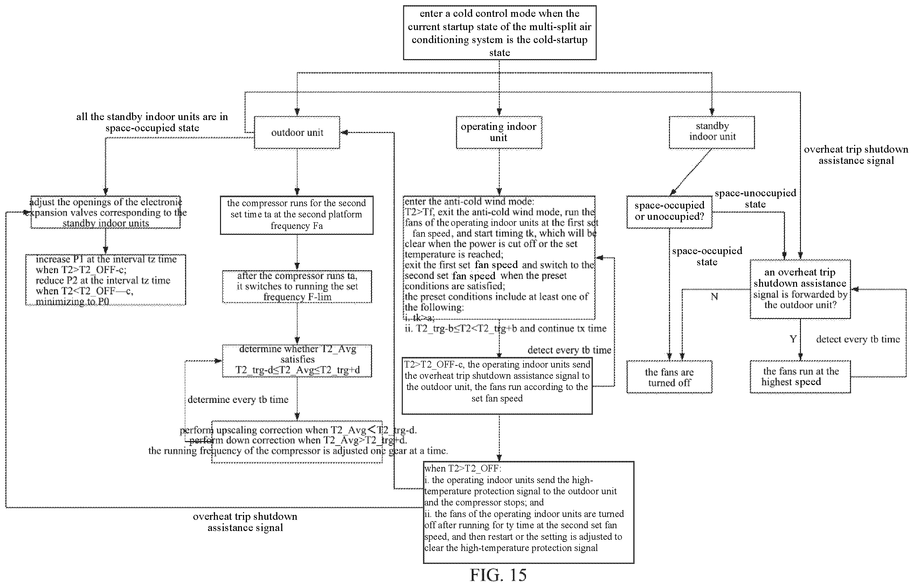

As shown in FIG. 15, when the current startup state of the multi-split air conditioning system is the cold-startup state, the system enters the cold control mode. The control method of the multi-split air conditioning system of the present disclosure is as follows.

### (1) The outdoor unit portion-compressor

1.1. The compressor runs for the second set time ta at the second platform frequency Fa. Fa is about 1/3 of the maximum running frequency, and a deviation range of Fa is ±10Hz.
1.2. After the compressor runs for the second set time ta, it switches to run at the set frequency F-lim, which is the lowest heating frequency.
1.3. It is determined whether T2_Avg satisfies T2_trg-d ≤ T2_Avg ≤ T2_trg+d. If so, there is no need to adjust the frequency, and if not, a step 1.4 is executed, and the determination is performed every tb time, where T2_trg is the second set temperature, which can also be called the heating target temperature and generally has a value of 47°C, ranging 42-52°C, T2 is the temperatures of the evaporator tubes of the operating indoor units, T2_Avg is the average value of T2 of all the operating indoor units, and d is the first set value configured to make the heating target temperature fall within the range of 42-52°C.
1.4. The upscaling correction is performed when T2_Avg < T2_trg-d. The down correction is performed when T2_Avg>T2_trg+d. The running frequency of the compressor is adjusted one fan speed at a time. During the upscaling correction, the maximum frequency of adjustment is up to fan speed e; and during the down correction, the frequency of adjustment is not limited.

### (2) The outdoor unit portion-electronic expansion valve

In an embodiment, if both the standby indoor units and outdoor unit receive the overheat trip shutdown assistance signal, and the outdoor unit determines that all the standby indoor units are occupied, the opening degrees of the electronic expansion valves corresponding to the standby indoor units are adjusted:
2.1. The opening degrees of the electronic expansion valves corresponding to the standby indoor units are adjusted.
2.2. P1 is increased every tz time when T2>T2_OFF-c; and P2 is reduced every tz time when T2<T2_OFF-c, minimizing to P0, where T2 is the temperatures of the evaporator tubes of the operating indoor units, T2_OFF is the set shutdown temperature, usually 62°C, c is the second set value which has a value of 6°C, ranging 4-8°C, P1 is the first opening degree and has a value of 15P, ranging 10P-20P, P2 is the second opening degree and has a value of 10P, ranging 15P-5P, tz is the sixth set time and has a value of 40s, ranging 20-120s, and P0 is the heating standby opening degree and has a value of 50P, ranging 40-80P.

In addition, the electronic expansion valves corresponding to the operating indoor units are controlled normally. If the standby indoor units do not receive the overheat trip shutdown assistance signal, the standby indoor units maintain the heating standby opening degree P0.

### (3) The operating indoor unit

For fan:
3.1. The operating indoor units enter the anti-cold wind mode, in which the fan does not start, and the breeze state starts, etc.
3.2. If T2>Tf, the operating indoor units exit the anti-cold wind mode, and the fans of the running indoor units run at the first set fan speed. The operating indoor units start to time tk, which will be clear when the power is cut off or the set temperature is reached, where T2 is the temperatures of the evaporator tubes of the operating indoor units, Tf is the first set temperature, which can also be called the anti-cold wind temperature, generally 30°C, ranging 28-32°C, the first set fan speed is the highest fan speed, and tk is the first running time.
3.3. The operating indoor units exit the first set fan speed, and switch to the second set fan speed when the preset conditions are satisfied.

The preset conditions include at least one of the following:
i. tk>a, where tk is the first running time, a is the third set time and has a value of 3 minutes, ranging 1-5 minutes;
ii. T2_trg-b ≤ T2<T2_trg+b, and this state lasts for tx time; when T2 satisfies T2_trg-b ≤ T2<T2_trg+b, it is within the preset temperature range, where T2_trg is the second set temperature, which can also be called the heating target temperature, tx is the fourth set time and has a value of 30s, ranging 20-60s, and b is the correction value.

3.4. If T2>T2_OFF-c, the operating indoor units send the overheat trip shutdown assistance signal to the outdoor unit, the fans run at the set fan speed, and detection is performed every tb time, where tb is 40s, ranging 20-120s, T2_OFF is the set shutdown temperature, and c is the second set value.

3.5. When T2>T2_OFF:
i. The operating indoor units send the high-temperature protection signal to the outdoor unit, and the compressor stops.
ii. The fans of the operating indoor units are turned off after running for ty time at the second set fan speed, and then the fans restart or the setting of the fans is adjusted to clear the high-temperature protection signal, where ty is the fifth set time and has a value of 1 minute, ranging 0.5-2 minutes.

### (4) The standby indoor unit-fan

The running steps are as follows. It is determined the environmental state of the space where the standby indoor units are located, that is, whether it is occupied. For the standby indoor units in a space-occupied state, the fans are turned off. For the standby indoor units in a space-unoccupied state, it is identified whether there is an overheat trip shutdown assistance signal forwarded by the outdoor unit. If no overheat trip shutdown assistance signal is received, the fans are turned off. If an overheat trip shutdown assistance signal is received, the fans run at the highest fan speed. Whether there is a high-temperature trip assistance signal forwarded by the outdoor unit is checked every tz time.

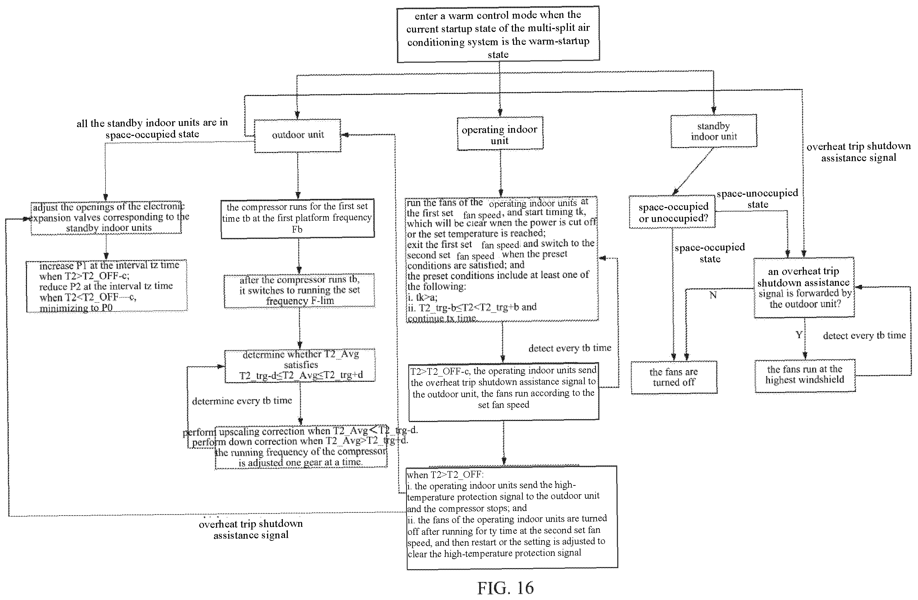

As shown in FIG. 16, when the current startup state of the multi-split air conditioning system is the warm-startup state, the system enters the warm control mode. The control method of the multi-split air conditioning system of the present disclosure is as follows.

### (1) The outdoor unit portion-compressor

1.1. The compressor runs for the first set time tb at the first platform frequency Fb, where Fb<Fa, about less than 5-15Hz, tb < ta, tb has a value of 10s, ranging 10-30s.
1.2. After the compressor runs for the time tb, it switches to run at the set frequency F-lim, which is the lowest heating frequency.
1.3. It is determined whether T2_Avg satisfies T2_trg-d ≤ T2_Avg ≤ T2_trg+d. If so, there is no need to adjust the frequency, and if not, a step 1.4 is executed, and the determination is performed every tb time, where T2_trg is the second set temperature, which can also be called the heating target temperature and generally has a value of 47°C, ranging 42-52°C, T2 is the temperatures of the evaporator tubes of the operating indoor units, T2_Avg is the average value of T2 of all the operating indoor units, and d is the first set value configured to make the heating target temperature fall within the range of 42-52°C.
1.4. The upscaling correction is performed when T2_Avg < T2_trg-d. The down correction is performed when T2_Avg>T2_trg+d. The running frequency of the compressor is adjusted one fan speed at a time. During upscaling correction, the maximum frequency of adjustment is up to fan speed e; and during down correction, the frequency of adjustment is not limited.

### (2) The outdoor unit portion-electronic expansion valve

In an embodiment, if both the standby indoor units and outdoor unit receive the overheat trip shutdown assistance signal, and the outdoor unit determines that all the standby indoor units are occupied, the opening degrees of the electronic expansion valves corresponding to the standby indoor units are adjusted.
2.1. The opening degrees of the electronic expansion valves corresponding to the standby indoor units are adjusted.
2.2. P1 is increased every tz time when T2>T2_OFF-c, and P2 is reduced every tz time when T2<T2_OFF-c, minimizing to P0, where T2 is the temperatures of the evaporator tubes of the operating indoor units, T2_OFF is the set shutdown temperature, usually 62°C, c is the second set value and has a value of 6°C, ranging 4-8°C, P1 is the first opening degree and has a value of 15P, ranging 10P-20P, P2 is the second opening degree and has a value of 10P, ranging 15P-5P, tz is the sixth set time and has a value of 40s, ranging 20-120s, and P0 is the heating standby opening degree and has a value of 50P, ranging 40-80P.

In addition, the electronic expansion valves corresponding to the operating indoor units are controlled normally. If the standby indoor units do not receive the overheat trip shutdown assistance signal, the standby indoor units maintain the heating standby opening degree P0.

### (5) The operating indoor unit

For fan:
3.1. The fans of the operating indoor units run at the first set fan speed, and the operating indoor units start to time tk, which will be clear when the power is cut off or the set temperature is reached, where the operating indoor units do not enter the anti-cold wind mode when starting, the first set fan speed is the highest fan speed, and tk is the first running time.
3.2. The operating indoor units exit the first set fan speed, and switches to the second set fan speed when the preset conditions are satisfied.

The preset conditions include at least one of the following:
i. tk>a, where tk is the first running time, a is the third set time and has a value of 3 minutes, ranging 1-5 minutes;
ii. T2_trg-b ≤ T2<T2_trg+b, and this state last for tx time, when T2 satisfies T2_trg-b ≤ T2<T2_trg+b, it is within the preset temperature range, where T2_trg is the second set temperature, which can also be called the heating target temperature; tx is the fourth set time and has a value of 30s, ranging 20-60s, and b is the correction value.

3.4. If T2>T2_OFF-c, the operating indoor units send the overheat trip shutdown assistance signal to the outdoor unit, the fans run at the set fan speed, and the detection is performed every tb time, where tb is 40s, ranging 20-120s, T2_OFF is the set shutdown temperature, and c is the second set value.

3.5. When T2>T2_OFF:
i. The operating indoor units send the high-temperature protection signal to the outdoor unit, and the compressor stops.
ii. The fans of the operating indoor units are turned off after running for ty time at the second set fan speed, then the fans restart or the setting of the fans is adjusted to clear the high-temperature protection signal, where ty is the fifth set time and has a value of 1 minute, ranging 0.5-2 minutes.

### (6) The standby indoor unit-fan

The running steps are as follows. It is determined the environmental state of the space where the standby indoor units are located, that is, whether it is occupied. For the standby indoor units in a space-occupied state, the fans are turned off. For the standby indoor units in a space-unoccupied state, it is identified whether there is an overheat trip shutdown assistance signal forwarded by the outdoor unit. If no overheat trip shutdown assistance signal is received, the fans are turned off. If the overheat trip shutdown assistance signal is received, the fans run at the highest fan speed. Whether there is the high-temperature trip assistance signal forwarded by the outdoor unit is checked every tz time.

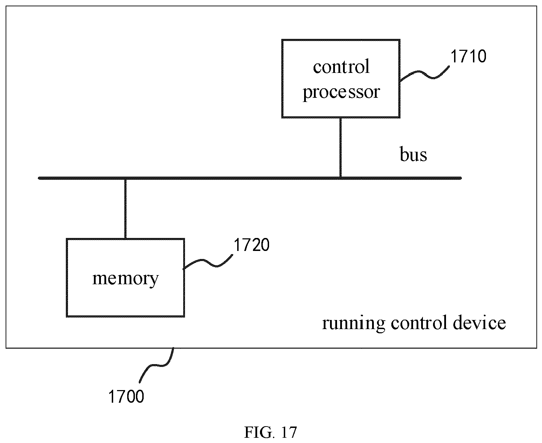

As shown in FIG. 17, embodiments of the second aspect of the present disclosure provide a running control device 1700, including at least one control processor 1710 and a memory 1720 configured to be in communication connection with the at least one control processor 1710. The control processor 1710 and the memory 1720 may be connected through a bus or other means. An example of being connected through a bus is shown in FIG. 17. The memory 1720 stores instructions that may be executed by the at least one control processor 1710. The instructions are executed by the at least one control processor 1710, such that the at least one control processor 1710 is capable of executing the control method of the multi-split air conditioning system as described in the embodiments of the first aspect, for example, executing the steps in FIGS. 2 to 16 described above. In the heating-start stage, an indoor environment temperature of the space where operating indoor units are located and temperature of the evaporator tube of each of the operating indoor units are obtained, and the current startup state of the multi-split air conditioning system is determined based on the indoor environment temperature and the temperature of the evaporator tube of each of the operating indoor units. When it is determined that the current startup state of the multi-split air conditioning system is a warm-startup state, the fans of the operating indoor units are controlled to run at a first set fan speed, which can speed up the heat dissipation of the operating indoor units, effectively reduce the over-voltage trip shutdown problem, and ensure the normal heating of the operating indoor units, thereby being beneficial to improving the user's experience.

Embodiments of the third aspect of the present disclosure provide a multi-split air conditioning system, including the running control device of the embodiments of the second aspect. According to the multi-split air conditioning system of the embodiments of the present disclosure, in the heating-start stage, an indoor environment temperature of the space where operating indoor units are located and temperature of the evaporator tube of each of the operating indoor units are obtained, and the current startup state of the multi-split air conditioning system is determined based on the indoor environment temperature and the temperature of the evaporator tube of each of the operating indoor units. When it is determined that the current startup state of the multi-split air conditioning system is a warm-startup state, the fans of the operating indoor units are controlled to run at a first set fan speed, which can speed up the heat dissipation of the operating indoor units, effectively reduce the over-voltage trip shutdown problem, and ensure the normal heating of the operating indoor units, thereby being beneficial to improving the user's experience.

Embodiments of the fourth aspect of the present disclosure provide a computer-readable storage medium. The computer-readable storage medium stores computer-executable instructions. The computer-executable instructions may be configured to cause the computer to execute the above control method of the multi-split air conditioning system of the embodiments of the first aspect, for example, executing the steps in FIGS. 2 to 16 described above. In the heating-start stage, an indoor environment temperature of the space where operating indoor units are located and temperature of the evaporator tube of each of the operating indoor units are obtained, and the current startup state of the multi-split air conditioning system is determined based on the indoor environment temperature and the temperature of the evaporator tube of each of the operating indoor units. When it is determined that the current startup state of the multi-split air conditioning system is a warm-startup state, the fans of the operating indoor units are controlled to run at a first set fan speed, which can speed up the heat dissipation of the operating indoor units, effectively reduce the over-voltage trip shutdown problem, and ensure the normal heating of the operating indoor units, thereby being beneficial to improving the user's experience.

Those having ordinary skill in the art may understand that all or some steps in the methods and systems disclosed above may be implemented as software, firmware, hardware, and appropriate combinations thereof. Some or all the physical components may be implemented as software executed by a processor, such as a central processing unit, a digital signal processor, or a microprocessor, or implemented as hardware, or as an integrated circuit, such as an application specific integrated circuit. Such software may be distributed on computer-readable media, which may include computer storage media or non-transitory media and communication media or temporary media. As well known to those having ordinary skill in the art, the term "computer storage media" includes volatile and nonvolatile media and removable and non-removable media implemented in any method or technology for storing information such as computer readable instructions, data structures, program modules or other data. Computer storage media include, but are not limited to, RAM, ROM, EEPROM, flash memory or other memory technology, CD-ROM, Digital Versatile Disk (DVD) or other optical disk storage, magnetic cassettes, magnetic tape, disk storage or other magnetic storage devices, or any other media that may be used to store the desired information and may be accessed by a computer. Additionally, it is well known to those having ordinary skill in the art that the communication media generally include computer readable instructions, data structures, program modules or other data in a modulated data signal such as a carrier wave or other transport mechanisms, and may include any information delivery media.

The embodiments of the present disclosure have been described in detail above with reference to the accompanying drawings. However, the present disclosure is not limited to the above embodiments. Various changes can be made within the scope of knowledge of those of ordinary skill in the art without departing from the spirit of the present disclosure.

## Claims

1. A control method of a multi-split air conditioning system, wherein the multi-split air conditioning system comprises an outdoor unit and a plurality of indoor units, and at least one of the plurality of indoor units is an operating indoor unit in a running state; and the control method comprises:
obtaining, in a heating-start stage, an indoor environment temperature of a space where the operating indoor unit is located and a temperature of an evaporator tube of each operating indoor unit; and
controlling a fan the operating indoor unit to run at a first set fan speed in response to determining that the current startup state of the multi-split air conditioning system is a warm-startup state based on the indoor environment temperature and the temperature of the evaporator tube of each operating indoor unit, wherein the first set fan speed is the highest fan speed in a plurality of set fan speeds.

2. The control method according to claim 1, further comprising:
controlling a compressor of the outdoor unit to run for a first set time at a first platform frequency in response to determining that the current startup state of the multi-split air conditioning system is the warm-startup state; and
controlling the compressor to run at a set frequency after the compressor runs for the first set time, wherein the first platform frequency is greater than the set frequency.

3. The control method according to claim 2, further comprising:
controlling the compressor to run for a second set time at a second platform frequency in response to determining that the current startup state of the multi-split air conditioning system is a cold-startup state based on the indoor environment temperature and the temperature of the evaporator tube of each operating indoor unit, the second platform frequency being greater than the first platform frequency and the second set time being longer than the first set time; and
controlling the compressor to run at the set frequency after the compressor runs for the second set time, wherein the second platform frequency is greater than the set frequency.

4. The control method according to claim 1, further comprising:
controlling the fans of the operating indoor units to enter an anti-cold wind mode in response to determining that the current startup state of the multi-split air conditioning system is a cold-startup state; and
exiting the anti-cold wind mode and controlling the fans of the operating indoor units to run at the first set fan speed in response to the temperature of the evaporator tube of the operating indoor unit being greater than the first set temperature, wherein the first set fan speed is the highest fan speed in the plurality of set fan speeds.

5. The control method according to claim 1 or 4, further comprising:
controlling a running fan speed of the fan to switch from the first set fan speed to the second set fan speed when a preset condition is met,
wherein the preset condition comprises at least one of:
a time for which the fan runs at the first set fan speed is greater than a third set time; or
a time during which the temperatures of the evaporator tubes of the operating indoor units have been within a preset temperature range is longer than a fourth set time.

6. The control method according to claim 2 or 3, after controlling the compressor to run at a set frequency, further comprising:
calculating an average temperature of the tubes based on the temperature of the evaporator tube of each operating indoor unit; and
adjusting a running frequency of the compressor based on the average temperature of the tubes.

7. The control method according to claim 6, wherein adjusting the running frequency of the compressor based on the average temperature of the tubes comprises:
increasing the running frequency of the compressor in response to the average temperature of the tubes being less than a difference between a second set temperature and a first set value; and
reducing the running frequency of the compressor in response to the average temperature of the tubes being greater than a sum of the second set temperature and the first set value.

8. The control method according to claim 1, further comprising:
in response to at least one of the plurality of indoor units being a standby indoor unit in a standby state, and the temperature of the evaporator tube of the operating indoor unit being greater than a difference between a set shutdown temperature and a second set value, controlling the multi-split air conditioning system to enter an overheat trip shutdown assistance mode to assist in reducing a pressure of the multi-split air conditioning system through the standby indoor unit or the outdoor unit.

9. The control method according to claim 8, further comprising:
determining the environmental state of the space where the standby indoor unit is located in response to the multi-split air conditioning system entering the overheat trip shutdown assistance mode, wherein the environmental state comprises a space-occupied state and a space-unoccupied state; and
controlling the fan of the standby indoor unit to run at a third set fan speed in response to determining that the standby indoor unit is in the space-unoccupied state, wherein the third set fan speed is the highest fan speed in the plurality of set fan speeds.

10. The control method according to claim 9, wherein the outdoor unit comprises a plurality of electronic expansion valves corresponding to the indoor units, and after the multi-split air conditioning system enters the overheat trip shutdown assistance mode, the control method further comprises:
adjusting an opening degree of each electronic expansion valve corresponding to the standby indoor units based on the temperatures of the evaporator tubes of the operating indoor units in response to each standby indoor unit being in a space-occupied state.

11. The control method according to claim 10, wherein adjusting an opening degree of each of the electronic expansion valves corresponding to the standby indoor units based on the temperatures of the evaporator tube of the operating indoor unit comprises:
increasing the opening degree of the electronic expansion valve corresponding to the standby indoor unit in response to the temperatures of the evaporator tube of the operating indoor unit being greater than the difference between the set shutdown temperature and the second set value; and
reducing the opening degree of the electronic expansion valve corresponding to the standby indoor unit in response to the temperature of the evaporator tube of the operating indoor units being less than the difference between the set shutdown temperature and the second set value.

12. The control method according to claim 1, wherein determining that the current startup state of the multi-split air conditioning system is a warm-startup state based on the indoor environment temperature and the temperature of the evaporator tube of each operating indoor unit comprises:
calculating an average temperature of the tubes based on the temperature of the evaporator tube of each operating indoor unit; and
determining that the current startup state of the multi-split air conditioning system is a warm-startup state in response to a difference between the average temperature of the tubes and the indoor environment temperature being greater than a third set temperature; and
wherein the control method further comprises:
determining that the current startup state of the multi-split air conditioning system is a cold-startup state in response to the difference between the average temperature of the tubes and the indoor environment temperature being less than or equal to the third set temperature.

13. The control method according to claim 1, before obtaining the indoor environment temperature of a space where the operating indoor unit is located and the temperature of the evaporator tube of each operating indoor unit, further comprising:
obtaining an outdoor environment temperature;
obtaining a first capacity of each operating indoor unit and a second capacity of the outdoor unit in response to the outdoor environment temperature being greater than a fourth set temperature;
calculating a sum of the capacities of the operating indoor units based on the first capacities of all the operating indoor units; and
determining that the multi-split air conditioning system has an overheat trip shutdown risk based on the second capacity and the sum of the capacities of the operating indoor units.

14. The control method according to claim 13, wherein determining that the multi-split air conditioning system has the overheat trip shutdown risk based on the second capacity and the sum of the capacities of the operating indoor units comprises:
determining that the multi-split air conditioning system has the overheat trip shutdown risk in response to the sum of the capacities of the operating indoor units being less than a product of the second capacity and a third set value.

15. A running control device, comprising at least one control processor and a memory configured to be in communication connection with the at least one control processor, wherein the memory stores instructions that are capable of being executed by the at least one control processor, and the instructions, when executed by the at least one control processor, cause the at least one control processor to execute the control method according to any one of claims 1 to 14.

16. A multi-split air conditioning system, comprising the running control device according to claim 15.

17. A computer-readable storage medium storing computer-executable instructions configured to cause a computer to execute the control method according to any one of claims 1 to 14.
